# EUROPÄISCHE PATENTSCHRIFT

(11) **EP 3 061 677 B1**
(45) Veröffentlichungstag und Bekanntmachung des Hinweises auf die Patenterteilung: **05.12.2018**
(21) Anmeldenummer: 16156645.0
(22) Anmeldetag: 22.02.2016
(51) Int. Cl.: B62D 51/02

(54) **FLURFÖRDERZEUG MIT EINEM FAHRERSTANDPLATZ**
INDUSTRIAL TRUCK WITH A DRIVER STAND
CHARIOT DE MANUTENTION DOTE D'UNE PLACE DEBOUT POUR LE CONDUCTEUR

(30) Priorität: 24.02.2015 DE 102015102583
(43) Veröffentlichungstag der Anmeldung: 31.08.2016
(73) Patentinhaber: Jungheinrich Aktiengesellschaft, 22047 Hamburg (DE)
(72) Erfinder: LOHMANN, Helmut, 27404 Gyhum (DE)
(74) Vertreter: Hauck Patentanwaltspartnerschaft mbB

(56) Entgegenhaltungen:
- EP-A1- 0 449 029
- EP-A1- 2 336 010
- EP-A2- 1 172 285
- WO-A2-2006/118925
- DE-A1-102009 058 598

## Beschreibung

Die vorliegende Erfindung betrifft ein Flurförderzeug mit einem Antriebsteil, das einen Fahrerstandplatz aufweist.

Bei Fahrten auf unebenem Boden ist eine weich gefederte Standplattform sehr komfortabel. Ein großer vertikaler Federweg entkoppelt die Standplattform vom Fahrzeug. Je nach Lagerungsart der Standplattform entsteht über den Federweg eine größere Schwenkbewegung der Plattform. Es kann auch zu einem seitlichen Verschwenken und Kippen bei sehr breiten Standflächen kommen. Bei häufigem Betreten und Verlassen der Standplattform wird von Fahrzeugführern ein zu großer Federweg als unsicher und instabil empfunden.

Aus DE 42 14 788 C2 ist eine Standfläche für einen stehenden Fahrer eines Flurförderzeugs bekannt geworden. Die Standfläche besitzt eine Plattform, die durch mindestens ein elastisch nachgebendes Pufferelement fahrzeugfest abgestützt ist, wobei eine versteifte Blechplatte an einem Ende mit einem flexiblen Abschnitt fest an dem fahrzeugfesten Teil verbunden ist und das Pufferelement die Blechplatte an dem anderen Ende abstützt.

Aus DE 103 60 298 A1 ist eine gefederte Fahrerplattform bekannt, bei der die Standplattform über ein Federelement gefedert und zusätzlich über ein Dämpfungselement gedämpft ist.

Aus DE 10 2005 045 505 A1 ist ein Bodenblech für eine Standplattform eines Flurförderzeugs bekannt. Das Bodenblech ist schwenkbar gelagert und von einer Feder in einer angehobenen Position vorgespannt, wobei unterhalb des Bodenblechs ein Näherungssensor angeordnet ist. Eine an der Unterseite des Bodenblechs angebrachte Schaltnase ist derart angeordnet, dass sie bei einer Verschwenkung des Bodenblechs nach unten gegen die Kraft der Feder durch Überdeckung mit dem Näherungssensor einen Schaltvorgang auslöst.

Aus DE 10 2006 009 330 A1 ist eine Standplattform für einen Hubwagen bekannt, bei der die Standfläche von einer oberen Bodenplatte gebildet ist, die an einer unteren Bodenplatte gelenkig gelagert und an ihrem gegenüberliegenden Ende durch Feder- und/oder Dämpfungselemente gedämpft wird.

Aus DE 10 2006 009 331 A1 ist eine Standplattform für einen Hubwagen bekannt, die eine gefederte Standfläche für eine Bedienperson aufweist, wobei die Standfläche von einer oberen Bodenplatte gebildet ist, die an einer unteren Bodenplatte gelenkig gelagert ist. Zwischen den Bodenplatten ist ein Federelement angeordnet, das die obere Bodenplatte gegenüber der unteren Bodenplatte nach oben vorspannt. Die obere Bodenplatte ist durch die Gewichtskraft einer Bedienperson entgegen der Kraft des Federelements nach unten bewegbar, wobei ein Positionssensor zum Erkennen der Position der oberen Bodenplatte vorgesehen ist.

Aus US 7,497,505 sowie US 8,414,065 ist jeweils ein Flurförderzeug bekannt, bei dem ein federnd gelagertes Bodenelement über ein Scherengetriebe in der Höhe verstellbar ist, wobei die federnde Wirkung durch vorgespannte Federelemente, die an dem Scherengetriebe oder an der Bodenplatte angreifen, in Position gehalten sind. Als nachteilig an dem bekannten Verfahren hat sich eine seitliche Instabilität der Bodenplattform herausgestellt.

Aus WO 2006/118925 A2 ist ein Flurförderzeug mit einem federnd gelagerten Bodenelement bekannt geworden. Das Bodenelement wird über ein zweiarmiges Scherengetriebe in der Höhe verstellt. Die federnde Wirkung wird durch fahrzeugfest angebrachte Federelemente erzeugt, die an einer zum Fahrzeug weisenden Seite an dem Bodenelement angreifen.

Aus EP 1 172 285 A2 ist ein federnd gelagertes Bodenelement an einem Flurförderzeug bekannt. Das Bodenelement ist an einer Seite fahrzeugfest angelenkt und an seinem freien Ende über eine elastische Feder abgestützt.

Der Erfindung liegt die Aufgabe zugrunde, ein Flurförderzeug mit einem gefederten Fahrerstandplatz bereitzustellen, bei dem der Fahrerstandplatz über den zurückgelegten Federweg stabil ist.

Erfindungsgemäß wird die Aufgabe durch ein Flurförderzeug mit den Merkmalen aus Anspruch 1 gelöst. Vorteilhafte Ausgestaltungen bilden die Gegenstände der Unteransprüche.

Das erfindungsgemäße Flurförderzeug besitzt ein Antriebsteil, das einen Fahrerstandplatz aufweist. Der Fahrerstandplatz besitzt eine L-förmige Standplattform mit einem horizontal angeordneten Bodenelement und einem vertikal stehenden Wandelement. Bei der Benutzung des Fahrerstandplatzes steht der Fahrer auf dem Bodenelement. Das Bodenelement ist über mindestens ein Federelement und eine Schwinge gegenüber einem Rahmen des Antriebsteils federnd gelagert. Das Wandelement besitzt ein Koppelelement, das auf die Bewegung der Standplattform einwirkt. Durch das Koppelelement wird eine annähernd lineare Bewegung der Standplattform bewirkt. Bevorzugt ist als Koppelelement eine Führungsrolle vorgesehen, die an einer fahrzeugfesten Führung abrollt. Durch die Kombination von Schwinge und Koppelelement entsteht eine annähernd lineare Bewegung des Bodenelements, die über das Federelement gefedert ist. Das Federelement wird nachfolgend nicht nur als Federelement verstanden, das elastische Eigenschaften besitzt, sondern es wird auch zugleich immer eine etwaig vorhandene dämpfende Wirkung des Federelements miteinbezogen. Insofern sind Federelemente im Sinne der Erfindung auch als ein Feder- und/oder Dämpfungselement zu verstehen.

Erfindungsgemäß weist die Schwinge mindestens einen Arm auf, der mit einem Ende an dem Rahmen des Antriebsteils und einem anderen Ende an dem Bodenelement angelenkt ist. Das Bodenelement schwingt dabei mit dem angelenkten Arm, wobei der mindestens eine Arm der Schwinge an einem von dem Wandelement fortweisenden Ende an dem Bodenelement angelenkt ist. Hierdurch entsteht eine annähernd lineare Bewegung für das Bodenelement.

In einer bevorzugten Ausgestaltung besitzt die Schwinge zwei über einen Querarm miteinander verbundene Arme. Die Arme sind hierbei bevorzugt als biegesteife Arme ausgebildet und der Querarm schafft bevorzugt eine torsionssteife Verbindung zwischen den beiden biegesteifen Armen. Mit dieser Ausgestaltung der Schwinge kann ein seitliches Verkippen des Bodenelements vermieden werden. Selbst bei einer einseitigen Belastung bewegen sich die Arme gleichmäßig und das Bodenelement bewegt sich somit ohne Kippbewegung hoch und runter.

In einer bevorzugten Ausgestaltung ist die Führungsrolle an dem von dem Bodenelement fortweisenden Ende des Wandelements angeordnet, wobei die Führung auf der zum Bodenelement weisenden Seite angeordnet ist. Bevorzugt ist ein fahrzeugfestes Führungselement vorgesehen, das über ein Paar von Seitenschenkeln mit dem Fahrzeug verbunden ist und die Führung für die Führungsrolle bildet. Die Seitenschenkel sind direkt mit dem Fahrzeug bzw. mit einem Fahrzeugrahmen verbunden oder mit einem zur Befestigung an dem Fahrzeug vorgesehenen Gestell. Insbesondere bei einem von dem Wandelement entfernt angeordneten Schwingenarm ist es für die Stabilität der Fahrerstandplattform vorteilhaft, wenn die Führungsrolle auf der zum Bodenelement weisenden Seite abrollt.

In einer bevorzugten Ausgestaltung ist ein Positionssensor vorgesehen, der mit dem Wandelement und/oder der Führungsrolle zusammenwirkt. Bevorzugt ist der Positionssensor oberhalb der Führungsrolle angeordnet und erfasst die Position der Führungsrolle in einer unbelasteten Position der Standplattform. Bevorzugt generiert der Positionssensor ein Totmannsignal, wenn der Positionssensor die Position einer unbelasteten Standplattform erfasst.

In einer bevorzugten Ausgestaltung ist ein Federelement an der zum Wandelement weisenden Seite des Bodenelements angeordnet und wirkt mit dem Bodenelement zusammen. Das Federelement kann direkt am Fahrzeug angebracht sein oder an dem zur Befestigung der Standplattform an dem Fahrzeug vorgesehenen Gestell.

Eine bevorzugte Ausgestaltung des erfindungsgemäßen Flurförderzeugs wird nachfolgend näher beschrieben. Es zeigen:
- Fig. 1: eine perspektivische Ansicht von schräg vorne auf das Flurförderzeug mit einer gefederten Standplattform,
- Fig. 2: einen Querschnitt durch den Fahrerstandplatz,
- Fig. 3: eine teilweise geschnittene Ansicht auf die Standplattform und
- Fig. 4: die aus zwei Armen und einem Querarm bestehende Schwinge.

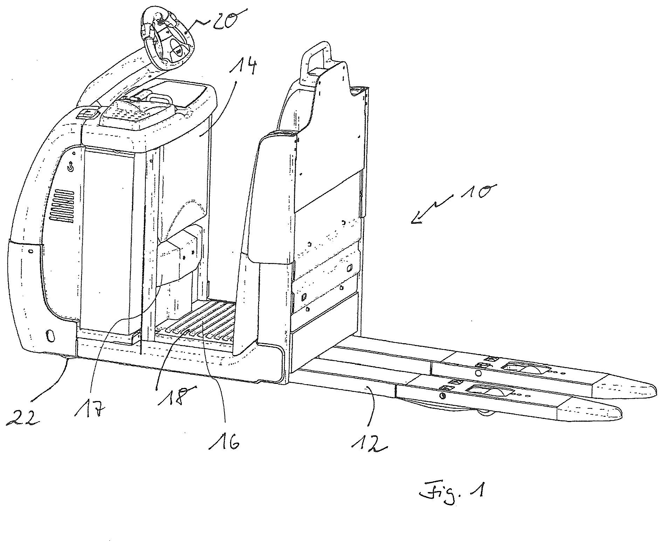

Fig. 1 zeigt ein Flurförderzeug 10 mit einem Antriebsteil 14 und einem Lastteil 12. Das Antriebsteil 14 besitzt einen Fahrerstandplatz 16, auf dem eine Matte 18 liegt. Auf dem Fahrerstandplatz 16 stehend hat eine Bedienperson Zugriff auf die Bedienelemente 20, über die beispielsweise ein angetriebenes Rad 22 an dem Antriebsteil gesteuert wird.

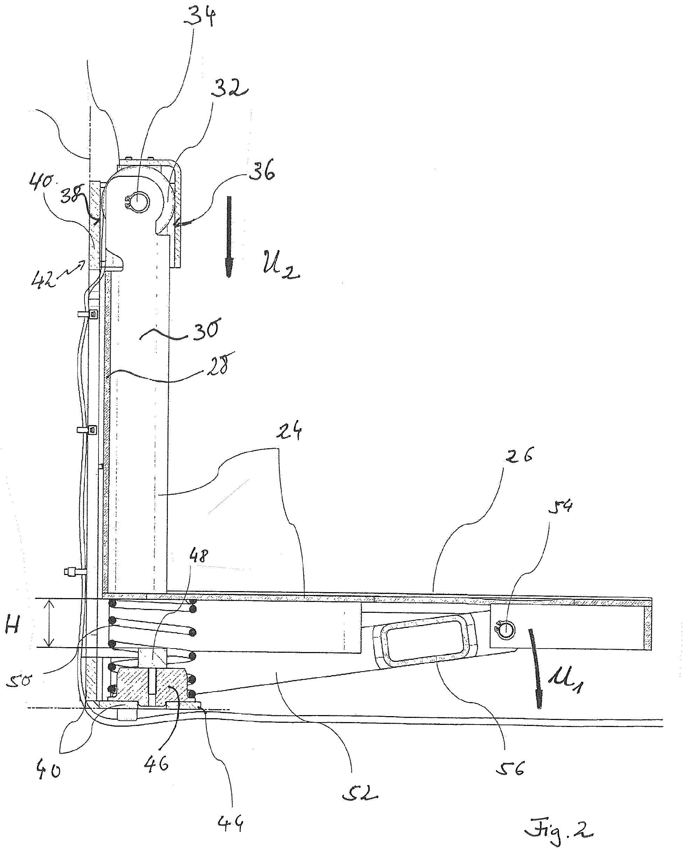

Fig. 2 zeigt einen Schnitt durch den Fahrerstandplatz 16. Der Fahrerstandplatz 16 besitzt eine L-förmige Standplattform 24, die ein Bodenelement 26 und ein Wandelement 28 besitzt. Bodenelement 26 und Wandelement 28 stehen in einem rechten Winkel zueinander, wobei das Wandelement 28 an der von dem Lastteil 12 fortweisenden Seite des Bodenelements 26 angeordnet ist. Das Wandelement 28 besitzt einen vertikal verlaufenden Steg 30, an dessen Ende eine Führungsrolle 32 in einer Achse 34 gelagert ist. Die Führungsrolle 32 liegt auf der zum Bodenelement 26 weisenden Seite an der Führung 36 an und rollt entlang dieser ab. Auf der der Führung 36 gegenüberliegenden Seite ist eine Lauffläche 38 eines Gestells 40 vorgesehen. Das Gestell 40 besteht im Wesentlichen aus einer die Lauffläche 38 bildenden Rückwand sowie einer vertikalen Flanschfläche 42 und einer horizontalen Flanschfläche 44. Vertikale und horizontale Flanschflächen sind miteinander verbunden und können beispielsweise an einem fahrzeugfesten Rahmen angebracht werden. Auf der horizontalen Flanschfläche 44 ist ein Vorsprung 46 vorgesehen, der zentral einen Anschlagpuffer 48 trägt. Auf dem Vorsprung 46 ist zudem eine Feder 50 angeordnet, die zwischen horizontaler Flanschfläche 44 und horizontalem Bodenelement 26 wirkt. Trittmatte 28 und Abdeckung 17 sind nicht dargestellt.

Wird das Bodenelement 26 mit einem Gewicht belastet, so wird die Feder 50 komprimiert und das Bodenelement 26 senkt sich in einer annähernd linearen Bewegung ab. Der hierbei zurückgelegte Hub ist als H gezeichnet.

Die Hubbewegung des Bodenelements 26 erfolgt über zwei biegesteife Arme 52, die an dem Bodenelement 26 über die Lagerstelle 54 schwenkbar angelenkt sind. Die biegesteifen Arme 52 besitzen an ihrem zur Lagerstelle 54 weisenden Ende einen torsionssteifen Querarm 56, der wie in Fig. 2 dargestellt, als Rechteckrohr ausgebildet ist. Die zweite Anlenkung des biegesteifen Arms 52 ist hinter dem Vorsprung 46 verdeckt. Der Arm 52 ist an seinem zu dem Gestell 40 weisenden Ende an der horizontalen Flanschfläche 44 angelenkt (verdeckt in Fig. 2).

Wird das Bodenelement 26 mit einem Gewicht belastet, so verschwenkt das Bodenelement 26 in einer annähernd linearen Bewegung in Richtung des Pfeils U₁ und wird dabei von der Führungsrolle 32 in der Führung 36 in eine lineare Bewegung U₂ umgesetzt. Bei einem Hub im Bereich von 30 mm bis 40 mm beträgt die Abweichung in horizontaler Richtung nur wenige Millimeter.

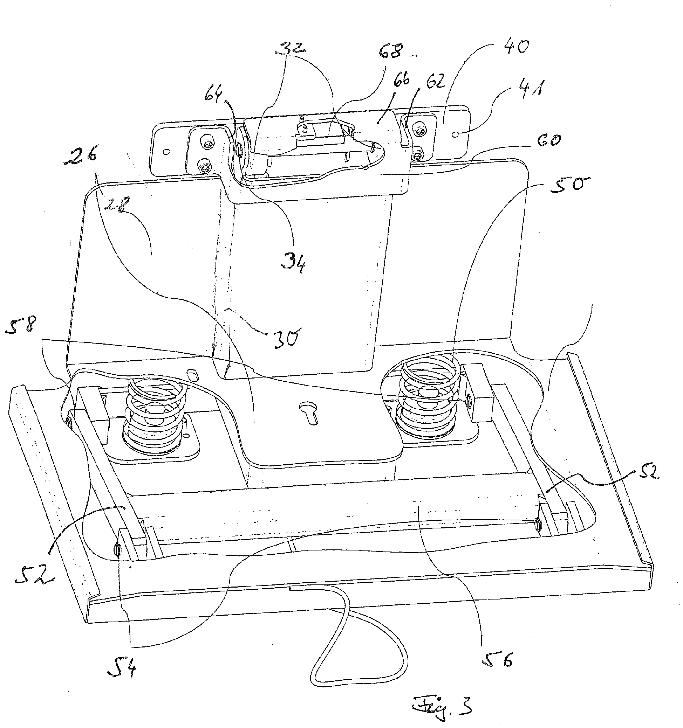

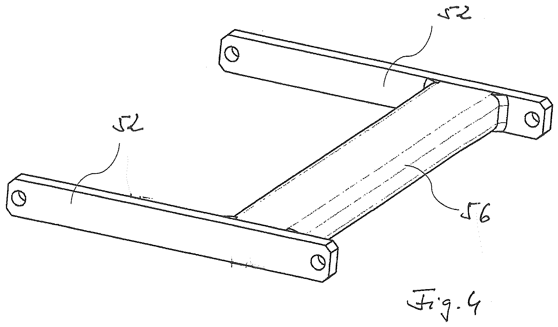

Fig. 3 zeigt bei teilweise durchbrochenem Bodenelement 26 den Aufbau der Doppelschwinge unter dem Bodenelement 26. Wie in Fig. 4 zu erkennen, besteht die Schwinge aus zwei parallel zueinander angeordneten Armen 52, die durch die torsionssteife Verbindung 56 miteinander verbunden sind. Die torsionssteife Verbindung der beiden biegesteifen Arme 52 sorgt dafür, dass nur ein Freiheitsgrad mit der Führungsrolle begrenzt werden muss. Die Arme 52 sind auf der zum Wandelement 28 weisenden Seite an dem Gestell 40 in jeweils einer Lagerstelle 58 schwenkbar gelagert. Die Federn 50 sind jeweils auf einem Vorsprung 46 zwischen den Armen 52 angeordnet.

In Fig. 3 zu erkennen ist, dass zwei Führungsrollen 32 vorgesehen sind, die am Ende eines Stegs 30 des Wandelements 28 angeordnet sind. Der Steg 30 entsteht aus dem Wandelement 28 durch einen viereckig vorstehenden Abschnitt. Die am Ende der Stege 30 angeordneten Führungsrollen 32 befinden sich innerhalb eines Führungselements 60, das mit seinen Seitenschenkeln 62 und 64 fahrzeugfest über Bohrungen 41 an dem Gestell 40 montiert ist. Im Bereich zwischen den Seitenschenkeln 62 und 64 ist eine Führungsfläche gegeben, an der die beiden Führungsrollen 32 abrollen. Das Führungselement 60 besitzt zudem eine Lasche 66, die in Richtung der Seitenschenkel 62, 64 gebogen ist. Die Lasche 66 bildet den oberen Anschlag der Hubbewegung und begrenzt den Weg der Führungsrollen nach oben.

An der Abdecklasche 66 ist auf der zu den Führungsrollen 32 weisenden Seite ein Positionssensor 68 vorgesehen, der eine Annäherung der Führungsrollen 32 oder deren Achse 34 erfasst. Der Positionssensor 68 dient als Totmannschalter, da ein Signal generiert wird, wenn aufgrund einer Belastung des Bodenelements sich die Führungsrollen von dem Positionssensor entfernen. Auf diese Weise kann festgestellt werden, ob sich eine Person auf dem Bodenelement 26 befindet oder nicht.

### Bezugszeichenliste

- 10: Flurförderzeug
- 12: Lastteil
- 14: Antrieb steil
- 16: Fahrerstandplatz
- 17: Abdeckung
- 18: Trittmatte
- 20: Bedienelement
- 22: angetriebenes Rad
- 24: L-förmige Standplattform
- 26: Bodenelement
- 28: Wandelement
- 30: Steg
- 32: Führungsrolle
- 34: Achse
- 36: Führung
- 38: Lauffläche
- 40: Gestell
- 41: Bohrung
- 42: vertikale Flanschfläche
- 44: horizontale Flanschfläche
- 46: Vorsprung
- 48: Anschlagpuffer
- 50: Feder
- 52: Arm
- 54: Lagerstelle
- 56: Querarm
- 58: Lagerstelle
- 60: Führungselement
- 62: Seitenschenkel
- 64: Seitenschenkel
- 66: Abdecklasche
- 68: Positionssensor

## Patentansprüche

1. Flurförderzeug mit einem Antriebsteil (14), das einen Fahrerstandplatz (16) aufweist, der eine Standplattform (24) mit einem horizontal angeordneten Bodenelement (26) und einem vertikal angeordneten Wandelement (28) aufweist, wobei das Bodenelement (26) über mindestens ein Federelement (50) und eine Schwinge (52, 56) gegenüber dem Antriebsteil (14) federnd gelagert ist und das Wandelement (28) ein auf die Bewegung der Standplattform wirkendes Koppelelement aufweist, **dadurch gekennzeichnet, dass** die Standplattform L-förmig ausgebildet ist und die Schwinge mindestens einen Arm (52) aufweist, der mit einem Ende an dem Rahmen des Antriebsteils (14) oder einem zur Befestigung an dem Antriebsteil vorgesehenen Gestell (40) und mit einem anderen Ende an dem Bodenelement (26) angelenkt ist.

2. Flurförderzeug nach Anspruch 1, **dadurch gekennzeichnet, dass** das Koppelelement eine Führungsrolle (32) aufweist, die an einer fahrzeugfesten Führung (36) abrollt.

3. Flurförderzeug nach einem der Ansprüche 1 bis 2, **dadurch gekennzeichnet, dass** der mindestens eine Arm (52) an einem von dem Wandelement (28) fortweisenden Ende an dem Bodenelement (26) angelenkt ist.

4. Flurförderzeug nach einem der Ansprüche 1 bis 3, **dadurch gekennzeichnet, dass** die Schwinge zwei über einen Querarm (56) miteinander verbundene Arme (52) aufweist.

5. Flurförderzeug nach einem der Ansprüche 1 bis 4, **dadurch gekennzeichnet, dass** die Führungsrolle (32) an dem von dem Bodenelement (26) fortweisende Ende des Wandelements (28) angeordnet ist, wobei die Führung (36) auf der zum Bodenelement (26) weisenden Seite angeordnet ist.

6. Flurförderzeug nach einem der Ansprüche 1 bis 5, **dadurch gekennzeichnet, dass** ein fahrzeugfestes Führungselement (60) vorgesehen ist, das über ein Paar von Seitenschenkeln (62, 64) mit dem Fahrzeug verbunden ist und die Führung (36) für die Führungsrolle (32) bildet.

7. Flurförderzeug nach einem der Ansprüche 1 bis 6, **dadurch gekennzeichnet, dass** ein Positionssensor (68) vorgesehen ist, der mit dem Wandelement (28) und/oder der Führungsrolle (32) zusammenwirkt.

8. Flurförderzeug nach Anspruch 7, **dadurch gekennzeichnet, dass** der Positionssensor (68) oberhalb der Führungsrolle (32) oder deren Achse angeordnet ist und bei unbelastetem Zustand der Standplattform (24) die Führungsrolle (32) und/oder ihre Achse in der Position erfasst.

9. Flurförderzeug nach Anspruch 7 oder 8, **dadurch gekennzeichnet, dass** der Positionssensor (68) ein Totmannsignal generiert, wenn der Positionssensor (68) eine Position der unbelasteten Standplattform erfasst.

10. Flurförderzeug nach einem der Ansprüche 1 bis 9, **dadurch gekennzeichnet, dass** das Federelement (50) an der zum Wandelement (28) weisenden Seite des Bodenelements (26) angeordnet ist und mit dem Bodenelement (26) zusammenwirkt.

## Claims

1. An industrial truck having a drive part (14) which comprises a driver stand (16), which comprises a driver's platform (24) with a horizontally arranged floor element (26) and a vertically arranged wall element (28), wherein the floor element (26) is resiliently mounted via at least one spring element (50) and a rocker (52, 56) relative to the drive part (14), and the wall element (28) comprises a coupling element which acts on the movement of the driver's platform, **characterised in that** the driver's platform is of L-shaped configuration and the rocker comprises at least one arm (52) which is articulated at one end to the frame of the drive part (14) or a supporting frame (40) provided for fastening to the drive part and is articulated at a further end to the floor element (26).

2. The industrial truck according to Claim 1, **characterised in that** the coupling element comprises a guide roller (32) which rolls on a guide (36) which is fixed to the vehicle.

3. The industrial truck according to one of Claims 1 to 2, **characterised in that** the at least one arm (52) is articulated to the floor element (26) at an end facing away from the wall element (28).

4. The industrial truck according to one of Claims 1 to 3, **characterised in that** the rocker comprises two arms (52) which are connected together via a transverse arm (56).

5. The industrial truck according to one of Claims 1 to 4, **characterised in that** the guide roller (32) is arranged at the end of the wall element (28) facing away from the floor element (26), wherein the guide (36) is arranged on the side facing toward the floor element (26).

6. The industrial truck according to one of Claims 1 to 5, **characterised in that** a guide element (60) which is fixed to the vehicle is provided, said guide element being connected to the vehicle via a pair of lateral limbs (62, 64) and forming the guide (36) for the guide roller (32).

7. The industrial truck according to one of Claims 1 to 6, **characterised in that** a position sensor (68) is provided, said position sensor cooperating with the wall element (28) and/or the guide roller (32).

8. The industrial truck according to Claim 7, **characterised in that** the position sensor (68) is arranged above the guide roller (32) or the axle thereof and in the unloaded state of the driver's platform (24) detects the position of the guide roller (32) and/or the axle thereof.

9. The industrial truck according to Claim 7 or 8, **characterised in that** the position sensor (68) generates a dead-man signal if the position sensor (68) detects a position of the unloaded driver's platform.

10. The industrial truck according to one of Claims 1 to 9, **characterised in that** the spring element (50) is arranged on the side of the floor element (26) facing the wall element (28) and cooperates with the floor element (26).

## Revendications

1. Chariot de manutention comprenant une partie d'entraînement (14) et doté d'une place debout pour le conducteur (16), présentant une plateforme de support (24) avec un élément de plancher (26) disposé horizontalement et un élément de paroi (28) disposé verticalement, dans lequel l'élément de plancher (26) est monté élastiquement par rapport à la partie d'entraînement (14) par le biais d'au moins un élément élastique (50) et d'un élément oscillant (52, 56), et dans lequel l'élément de paroi (28) présente un élément d'accouplement agissant sur le mouvement de la plateforme de support, **caractérisé en ce que** la plateforme de support est conçue en forme de L et l'élément oscillant présente au moins un bras (52) articulé avec une extrémité sur le cadre de la partie d'entraînement (14) ou sur une monture (40) prévue pour la fixation sur la partie d'entraînement et avec une autre extrémité sur l'élément de plancher (26).

2. Chariot de manutention selon la revendication 1, **caractérisé en ce que** l'élément d'accouplement présente un rouleau de guidage (32) roulant sur un guidage installé fixement dans le véhicule (36).

3. Chariot de manutention selon l'une des revendications 1 à 2, **caractérisé en ce que** l'au moins un bras (52) est articulé sur l'élément de plancher (26) à une extrémité opposée à l'élément de paroi (28).

4. Chariot de manutention selon l'une des revendications 1 à 3, **caractérisé en ce que** l'élément oscillant présente deux bras (52) reliés entre eux par un bras transversal (56).

5. Chariot de manutention selon l'une des revendications 1 à 4, **caractérisé en ce que** le rouleau de guidage (32) est disposé à une extrémité de l'élément de paroi (28) opposée à l'élément de plancher (26), le guidage (36) étant disposé sur le côté tourné vers l'élément de plancher (26).

6. Chariot de manutention selon l'une des revendications 1 à 5, **caractérisé en ce qu'**il est prévu un élément de guidage installé fixement dans le véhicule (60), lequel est relié au véhicule par le biais d'une paire de branches latérales (62, 64) et forme le guidage (36) pour le rouleau de guidage (32).

7. Chariot de manutention selon l'une des revendications 1 à 6, **caractérisé en ce qu'**il est prévu un capteur de position (68) coopérant avec l'élément de paroi (28) et/ou avec le rouleau de guidage (32).

8. Chariot de manutention selon la revendication 7, **caractérisé en ce que** le capteur de position (68) est disposé au-dessus du rouleau de guidage (32) ou de l'axe de celui-ci et détecte la position du rouleau de guidage (32) et/ou de l'axe de celui-ci dans l'état non chargé de la plateforme de support (24).

9. Chariot de manutention selon la revendication 7 ou 8, **caractérisé en ce que** le capteur de position (68) génère un signal d'homme mort lorsque le capteur de position (68) détecte une position de la plateforme de support non chargée.

10. Chariot de manutention selon l'une des revendications 1 à 9, **caractérisé en ce que** l'élément élastique (50) est disposé sur un côté de l'élément de plancher (26) tourné vers l'élément de paroi (28) et coopère avec l'élément de plancher (26).
